# EUROPÄISCHE PATENTANMELDUNG

(11) **EP 2 711 667 A1**
(43) Veröffentlichungstag der Anmeldung: **26.03.2014**
(21) Anmeldenummer: 12185351.9
(22) Anmeldetag: 21.09.2012
(51) Int. Cl.: G01C 3/08, G01S 17/48, G01S 17/10, G01S 17/36

(54) **Vorrichtung zur Entfernungsmessung**

(71) Anmelder: Baumer Electric AG, 8501 Frauenfeld (CH)
(72) Erfinder: Weigel, Michael, 88142 Wasserburg (DE); Tiedeke, Joachim, 8280 Kreuzlingen (CH); Rietmann, Christof, 9508 Weingarten (CH)
(74) Vertreter: Strauss, Steffen

(57) **Zusammenfassung**

Eine Vorrichtung zur Entfernungsmessung umfasst in bekannter Weise mindestens eine Senderlichtquelle (1), mindestens einen Empfangssensor (5) sowie eine Steuer- und Auswertelektronik (2), die in einem Betriebsmodus die Senderlichtquelle (1) so ansteuert und das Ausgangssignal des Empfangssensors (5) so auswertet, dass aus der Laufzeit eines von der Senderlichtquelle (1) ausgesandten und am Messobjekt auf den Empfangssensor (5) zurückgestreuten Lichtimpulses oder aus der Differenz der Phasenlage des ausgesandten Lichtes und des auf den Empfangssensor (5) zurückgestreuten Lichtes die Entfernung des Messobjektes berechnet werden kann.

Mindestens ein Empfangssensor (9) dieser Vorrichtung funktioniert als Triangulationssensor und besitzt hierzu eine derartige räumliche Ausdehnung und ein solches räumliches Auflösungsvermögen, dass aus seinem Ausgangssignal der Winkel zwischen dem von der Senderlichtquelle (1) ausgesandten und dem am Messobjekt zurückgestreuten Licht ermittelbar ist. Die Steuer- und Auswertelektronik (2) besitzt einen zweiten Betriebsmodus, in dem nach dem Triangulationsverfahren aus dem vom räumlich auflösenden Empfangssensor (9) zugeführten Signal die Entfernung des Messobjekts errechnet werden kann. Die Umschaltung zwischen den beiden Betriebsmodi der Steuer- und Auswerteelektronik (2) erfolgt jeweils bei einem Grenzwert oder Grenzwertbereich der Entfernung, der in der Steuer- und Auswerteelektronik (2) einspeicherbar ist. Die beschriebene Vorrichtung eignet sich zur hochgenauen Entfernungsmessung von einem sehr nahen bis zu einem sehr fernen Bereich.

## Beschreibung

Die Erfindung betrifft eine Vorrichtung zur Entfernungsmessung mit
a) mindestens einer Senderlichtquelle;
b) mindestens einem Empfangssensor;
c) einer Steuer -und Auswertelektronik,
   welche die Senderlichtquelle ansteuert und der Ausgangssignale des Empfangssensors zugeführt werden und die in der Lage ist, in einem Betriebsmodus aus der Laufzeit von Lichtimpulsen, die von der Senderlichtquelle ausgesandt, an einem Messobjekt zurückgestreut und von dem Empfangssensor detektiert werden, oder aus dem Vergleich der Phasenlagen des von der Senderlichtquelle ausgesandten und des von dem Empfangssensor detektierten Lichts die Entfernung des Messobjekts zu errechnen.

Zur berührungslosen Entfernungsmessung werden bevorzugt drei Verfahren eingesetzt, die jeweils ihre besonderen Vor - und Nachteile besitzen. Beim sogenannten "Time of Flight"-Verfahren (TOF) wird die Laufzeit eines Lichtimpulses ermittelt, der die Strecke von der Senderlichtquelle zum Messobjekt und vom Messobjekt zum Empfangssensor zurücklegt. Diese Laufzeit lässt sich dann direkt in die Entfernung des Messobjekts umrechnen. Ähnlich arbeitet das sogenannte Phasenmessverfahren, bei dem die Lage der Phase, die das von der Senderlichtquelle ausgesandte Licht besitzt, mit der Lage der Phase vergleicht, die von dem Empfangssensor detektiert wird. Die Phasendifferenz ist wiederum leicht in die Entfernung des Messobjektes umrechenbar.

Diese beiden Messverfahren ähneln sich in ihren Vor -und Nachteilen. Sie eignen sich insbesondere für größere Entfernungen, während sich im Nahbereich Probleme ergeben. Zu diesen Problemen gehört insbesondere, dass sich bei geringen Entfernungen des Messobjektes die Öffnungswinkel von Sende- und Empfangskanal nicht überschneiden, so dass in diesem Entfernungsbereich Energie vom Messobjekt allenfalls über Streueffekte auf den Empfangssensor gelangen. Zudem können im Nahbereich durch die Reflektanz und Geometrie der Umgebung die Messungen stark verfälscht werden. Dazu zählen auch Mehrfachreflektionen zwischen der Frontfläche der Vorrichtung und dem Messobjekt. Zusätzlich gibt es Störeinflüsse, die elektrisch zwischen Sende -und Empfangskanal übertragen werden.

All diese Nachteile des TOF bzw. Phasenmessverfahrens fallen bei größeren Distanzen weniger ins Gewicht. Die Messgenauigkeit dieser Verfahren, die prinzipbedingt kleiner als 10 mm ist, ist weitgehend unabhängig von der Entfernung des Messobjekts.

Anders dagegen verhalten sich Vor- und Nachteile beim Triangulationsverfahren. Hier ist die Messgenauigkeit abhängig von der Geometrie, insbesondere vom Basisabstand, also dem Abstand zwischen Senderlichtquelle und Empfangssensor, der Empfängerbrennweite, der Zeilenauflösung des entsprechenden Empfangssensors, der Subpixelinterpolation, des Signal-Rausch-Verhältnisses usw. Bei gleichmäßiger Entfernungsänderung des Messobjektes wird die Winkeländerung mit zunehmendem Abstand kleiner. Dies bedeutet, dass die Messgenauigkeit im Nahbereich gut ist, mit größerem Abstand jedoch schlechter wird. Diese Technologie hat somit ihre Stärken im Entfernungsbereich zwischen null Metern und zwei Metern. Die Genauigkeit im Abstand von einem Meter liegt je nach gewählter Geometrie bei unter 3 mm.

Bei der eingangs genannten Art von Vorrichtung handelt es sich um eine solche, die entweder nach dem TOF-Verfahren oder dem Phasenmessverfahren arbeitet. Derartige Vorrichtungen sind beispielsweise aus der DE 36 20 226 A1, der EP 0 312 524 A1 oder der EP 0 066 888 A2 bekannt.

Aufgabe der vorliegenden Erfindung ist es, eine Vorrichtung der eingangs genannten Art zu schaffen, die über einen sehr großen Bereich der Entfernung zwischen Vorrichtung und Messobjekt mit hoher Messgenauigkeit arbeiten kann.

Diese Aufgabe wird erfindungsgemäß dadurch gelöst, dass
d) mindestens ein Empfangssensor eine derartige räumliche Ausdehnung und ein solches räumliches Auflösungsvermögen besitzt, dass der von dem zurückgestreuten Licht bestrahlte Bereich ein Maß für den Winkel zwischen dem von der Senderlichtquelle ausgestrahlten und dem am Messobjekt zurückgestreuten Licht ist;
e) die Steuer -und Auswertelektronik so ausgebildet ist, dass sie in einem zweiten Betriebsmodus in der Lage ist, aus dem von dem räumlich auflösenden Empfangs - sensor zugeführten Signal die Entfernung des Messobjektes zu errechnen;
   wobei
f) in der Steuer -und Auswertelektronik ein erster Grenzwert für die Entfernung des Messobjektes speicherbar ist, bei dessen Überschreiten ausschließlich der erste Betriebsmodus aktiviert wird, und ein zweiter Grenzwert für die Entfernung des Messobjekts speicherbar ist, bei dessen Unterschreiten ausschließlich der zweite Betriebsmodus der Steuer- und Auswertelektronik aktiviert wird.

In einer erfindungsgemäßen Vorrichtung lassen sich somit sowohl das TOF - bzw. Phasenmessverfahren in einem ersten Betriebsmodus als auch das Triangulationsverfahren in einem zweiten Betriebsmodus durchführen, wobei die Vorrichtung entsprechend den eingespeicherten Grenzwerten der Entfernung des Messobjektes automatisch denjenigen Betriebsmodus aussucht, der für die gemessene Entfernung am geeignetsten ist. Die Bedienungsperson erhält somit immer ein Messergebnis mit systembedingt höchster Messgenauigkeit.

Bei einer vorteilhaften Ausführungsform der erfindungsgemäßen Vorrichtung ist die Senderlichtquelle und / oder eine der Senderlichtquelle nachgeschaltete Senderlinse in beiden Betriebsmodi der Steuer- und Auswertelektronik dieselbe. Trotz Kombination zweier Messverfahren wird also die Zahl der erforderlichen Komponenten nicht verdoppelt; ein Teil der Komponenten, insbesondere die Senderlichtquelle und / oder die Senderlinse, kann in beiden Betriebsmodi kostensparend genutzt werden.

Auch der Empfangssensor kann unter bestimmten Bedingungen in beiden Betriebsmodi der Steuer -und Auswertelektronik derselbe sein, wobei in dem ersten Betriebsmodus nur ein räumlicher Teilbereich des Empfangssensors zur Erzeugung eines Ausgangssignales genutzt wird. Welcher räumliche Teilbereich verwendet wird, hängt von den geometrischen und optischen Gegebenheiten ab und wird so gewählt, dass die energetischen Verhältnisse an dem Empfangssensor in beiden Betriebsmodi möglichst günstig sind.

Grundsätzlich ist es aber auch möglich, dass für die beiden Betriebsmodi der Steuer - und Auswertelektronik getrennte Empfangssensoren vorgesehen sind. Jeder Empfangssensor kann so für seine spezielle Aufgabe optimiert werden.

Zur Beleuchtung dieser beiden Empfangssensoren gibt es wiederum unterschiedliche Möglichkeiten:
Bei einer dieser Möglichkeiten ist eine (einzige) Empfangslinse vorgesehen, welche das von dem Messobjekt zurückgestreute Licht auf beide Empfangssensoren bündelt. Diese Variante hat den Vorteil weniger Bauteile und ist entsprechend kostengünstig.

Dabei kann der Empfangslinse in Lichtstrahlrichtung ein halbdurchlässiger Spiegel nachgeschaltet sein, wobei das von dem Spiegel durchgelassene Licht auf einen und das am Spiegel reflektierte Licht auf den anderen der beiden Empfangssensoren fällt. Diese Ausgestaltung lässt dem Konstrukteur weitgehend freie Hand bei der Positionierung der beiden Sensoren. Außerdem sind Übergangsprobleme reduziert, die beim Umschalten zwischen den beiden Betriebsmodi auftreten könnten.

Die andere Möglichkeit der Abbildung des Lichts auf die beiden Empfangssensoren ist die, jedem Empfangssensor eine eigene Empfangslinse zuzuordnen. So lassen sich die Abbildungseigenschaften in jedem Betriebsmodus optimieren.

Zur Steigerung der Messgenauigkeit kann der mindestens einen Senderlichtquelle eine Strahlformoptik nachgeschaltet sein, welche das von der Senderlichtquelle ausgesandte Licht derart auffächert, dass das Messobjekt linienhaft oder flächig beleuchtet wird.

Der erste Grenzwert kann mit dem zweiten Grenzwert identisch sein, sodass das Umschalten vom einen zum anderen Betriebsmodus unmittelbar bei diesem Grenzwert erfolgt. Es ist also immer nur ein Betriebsmodus aktiv. Dies ist steuerungs- und programmiertechnisch besonders einfach, kann aber unter ungünstigen Umständen bei dem Wechsel von einem zum anderen Betriebsmodus zu Problemen mit der Kontinuität des erzeugten Signales führen.

Zu genaueren Resultaten im Übergangsbereich zwischen den beiden Betriebsmodi kann eine Ausgestaltung der Erfindung führen, bei welcher der erste Grenzwert größer als der zweite Grenzwert ist und bei der in dem Entfernungsbereich, der zwischen den beiden Grenzwerten liegt, beide Betriebsmodi aktiviert werden und die Steuer - und Auswertelektronik so programmiert ist, dass die in beiden Betriebsmodi erhaltenen Signale zur Berechnung der gemessenen Entfernung kombiniert werden. In diesem Übergangsbereich, in denen beide Messverfahren systembedingt nicht ihre größte Genauigkeit besitzen, wird also die Gesamtmessgenauigkeit durch Verwertung beider Signale erhöht.

Im einfachsten Falle kann man das arithmetische Mittel der in beiden Betriebsmodi gemessenen Werte ermitteln. Günstiger aber ist diejenige Ausführungsform der Erfindung, bei welcher bei der Kombination der in den beiden Betriebsmodi gewonnenen Signale das Signal des ersten Betriebsmodus in der Nähe des ersten Grenzwertes stärker als in der Nähe des zweiten Grenzwertes gewichtet wird und das Signal des zweiten Betriebsmodus in der Nähe des zweiten Grenzwertes stärker gewichtet wird als in der Nähe des ersten Grenzwertes. So kann etwa die Gewichtung des Signales des ersten Betriebsmodus linear ansteigen von 0% am zweiten Grenzwert auf 100% am ersten Grenzwertes, während die Gewichtung des Signales des zweiten Betriebsmodus linear von 100% am zweiten Grenzwert auf 0% am ersten Grenzwert abfällt.

Diskontinuitäten des gemessenen Entfernungssignales lassen sich auch dadurch verhindern, dass die Steuer - und Auswertelektronik ein Alpha- oder Kalman - Filter enthält.

Ausführungsbeispiele der Erfindung werden nachstehend anhand der Zeichnung näher erläutert; es zeigen
- Figur 1: ein Diagramm, in dem für das TOF-Verfahren die Energie am Empfangssensor als Funktion der Entfernung des Messobjektes aufgetragen ist;
- Figur 2: ein Diagramm, ähnlich der Figur 1, jedoch für das Triangulationsverfahren;
- Figur 3: schematisch eine Vorrichtung zur Entfernungsmessung, in welcher das TOF-Verfahren mit dem Triangulationsverfahren kombiniert ist;
- Figur 4: ein alternatives Ausführungsbeispiel einer solchen Vorrichtung;
- Figur 5: ein drittes Ausführungsbeispiel einer solchen Vorrichtung;
- Figur 6: ein viertes Ausführungsbeispiel einer Vorrichtung zur Entfernungsmessung und
- Figur 7: in einer angedeuteten Perspektive ein fünftes Ausführungsbeispiel einer Vorrichtung zur Entfernungsmessung.

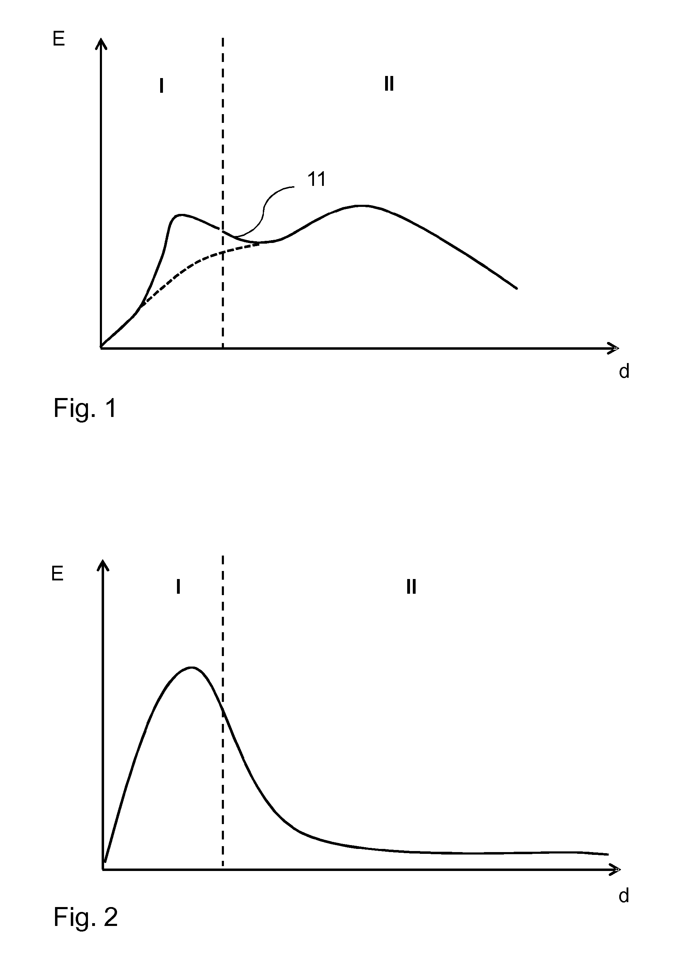

Zunächst wird anhand der Figuren 1 und 2 kurz auf die Besonderheiten des TOF-Verfahrens und des Triangulationsverfahrens bei der Entfernungsmessung eingegangen, soweit sie im vorliegenden Zusammenhang von Interesse ist.

In Figur 1 ist auf der Abszisse die Entfernung d des Messgegenstandes und auf der Ordinate die Energie E aufgetragen, die vom Empfangssensor gemessen wird. Es sind zwei Bereiche I und II angedeutet, die durch eine vertikale gestrichelte Linie voneinander getrennt sind. Der Bereich I stellt das Nahfeld dar, das dadurch gekennzeichnet ist, dass sich die Empfangsbereiche von Sendezweig und Empfangszweig der Vorrichtung erst zu überlappen beginnen. Bei Entfernung d = 0 findet keine Überlappung statt, so dass die auf den Empfangssensor gelangende Energie null ist. Mit zunehmender Entfernung wächst die Überlappung der Empfangsbereiche von Sendezweig und Empfangszweig, weshalb hier die Energie zunimmt. Der Bereich II ist der Fernbereich, wobei der genaue Verlauf der Energiekurve von den jeweiligen Besonderheiten der Geometrie und der eingesetzten optischen Elemente abhängt. Hier spielt auch die bekannte Abhängigkeit der Energie von der Entfernung ab, die umgekehrt proportional zu dy ist. Gute und hochgenaue Messungen lassen sich mit dem TOF-Verfahren im Wesentlichen in dem Fernbereich II durchführen.

In Figur 2 sind die Verhältnisse für die Triangulation dargestellt. Erneut sind die beiden Bereiche I und II durch eine vertikale, gestrichelte Linie voneinander getrennt; sie kennzeichnen wiederum den Nahbereich bzw. Fernbereich. Anders als beim TOF-Verfahren wächst beim Triangulationsverfahren im Nahbereich die auf den Empfänger gelangende Energie typischerweise sehr rasch an und fällt dann bei größerer Entfernung, insbesondere also im Bereich II, umgekehrt proportional zum Quadrat der Entfernung ab.

Der Vergleich der Figuren 1 und 2 macht deutlich, dass sich die beiden bekannten Verfahren zur Entfernungsmessung, nämlich die TOF-Messung nach Figur 1 und die Triangulationsmessung nach Figur 2, grundsätzlich ideal ergänzen können, da jedes Messverfahren gerade in demjenigen Bereich, in dem das jeweils andere keine guten Ergebnisse liefert, besonders geeignet ist.

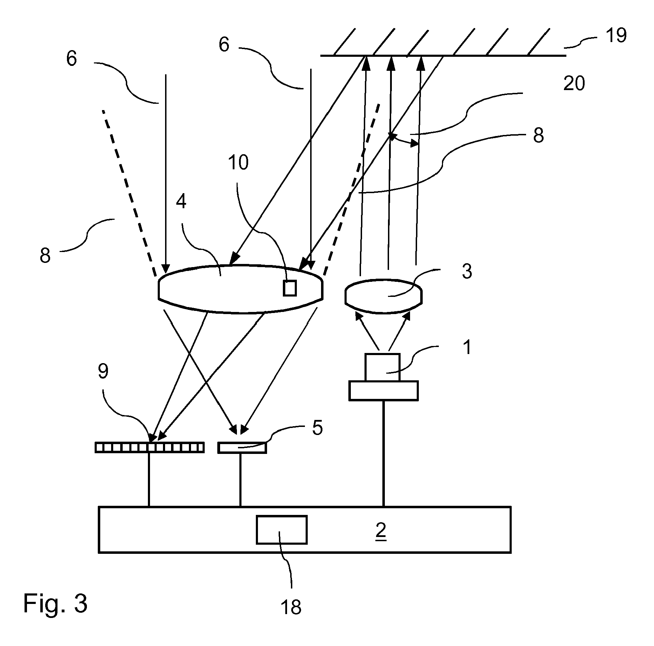

In Figur 3 ist eine Vorrichtung zur Entfernungsmessung schematisch dargestellt, welche sich zur kombinierten Anwendung des TOF-Verfahrens und des Triangulationsverfahrens eignet. Mit dem Bezugszeichen 1 ist eine Senderlichtquelle, insbesondere eine LED, bezeichnet, die von einer Steuer -und Auswertelektronik 2 gepulst angesteuert wird und dementsprechend eine Lichtimpulsfolge entsprechender Frequenz ausstrahlt. Die Lichtimpulse gelangen über eine Senderlinse 3 auf das Messobjekt 19 an dem die Lichtimpulse gestreut werden.

Ein Teil des an dem Messobjekt 19 gestreuten Lichtes gelangt zurück auf eine Empfangslinse 4 und wird von dieser auf einen Empfangssensor, im Allgemeinen eine Photodiode 5, fokussiert. Die Photodiode 5 ist mit der Steuer -und Auswertelektronik 2 verbunden.

Die oben beschriebenen Elemente, also die Steuer -und Auswertelektronik 2, die Senderlichtquelle 1, die Senderlinse 3, die Empfangslinse 4 und die Photodiode 5 stellen eine komplette Vorrichtung zur Entfernungsmessung dar, die nach dem TOF-Prinzip arbeitet. Dies bedeutet, dass die Steuer -und Auswertelektronik 2 die Zeit ermittelt, die zwischen dem Ausstrahlen eines Lichtimpulses von der Senderlichtquelle 1 bis zum Empfang auf der Photodiode 5 verstreicht. Aus dieser Zeitdifferenz lässt sich in bekannter Weise die Entfernung d des Messobjektes errechnen.

Befindet sich das Messobjekt in größerem Abstand d von der Vorrichtung, insbesondere der Photodiode 5, so kehren die gestreuten Lichtstrahlen im gestrichelt (Linien 8) angedeuteten Empfangsbereich der Vorrichtung nahezu parallel zu den im Sendezweig ausgestrahlten Lichtstrahlen zur Photodiode 5 zurück. Die entsprechenden Strahlen sind in Figur 1 mit dem Bezugszeichen 6 gekennzeichnet. Bei diesem Einfallswinkel auf die Empfangslinse 4 werden die Strahlen auf die Photodiode 5 abgebildet.

Wie der Figur 1 zu entnehmen ist, ist neben der Photodiode 5, die Teil der TOF-Vorrichtung ist, eine weiterer Empfangssensor angeordnet, bei dem es sich insbesondere um ein eindimensionales oder zweidimensionales Photodiodenarray 9 handeln kann. Auch dieses Photodiodenarray 9 ist mit der Steuer -und Auswertelektronik 2 verbunden.

Im Nahfeld, also bei verhältnismäßig kleinen Entfernungen des Messobjekts 19 von der Vorrichtung, insbesondere von dem Photodiodenarray 9, wird der Winkel zwischen dem Licht, das von dem Messobjekt 19 zurückgestreut wird und in die Empfangslinse 4 gelangt, und den Senderlichtstrahlen zunehmend größer. Auf diese Weise verschiebt sich der Abbildungsfleck, der von der Empfangslinse 4 erzeugt wird in seitlicher Richtung, und zwar auf das Photodiodenarray 9 zu. Die genaue Position des Abbildungsflecks auf dem Photodiodenarray 9 ist ein Maß für den Winkel, der auf diese Weise bestimmbar ist und in die Entfernung des Messobjektes umgerechnet werden kann.

In der Steuer -und Auswertelektronik 2 ist ein bestimmter Grenzwert für die Entfernung einprogrammiert, bei welchem der Betriebsmodus, in dem die Steuer- und Auswertelektronik 2 arbeitet, umgeschaltet wird. Liegt die Entfernung oberhalb dieses Grenzwertes, so befindet sich der Abbildungsfleck der Empfangslinse 4 auf der zur TOF-Vorrichtung gehörenden Photodiode 5. Deren Ausgangssignal wird in diesem ersten Betriebsmodus verarbeitet, wie dies beim TOF-Verfahren üblich ist.

Wird nunmehr die Entfernung des Messobjektes geringer als der in der Steuer- und Auswertelektronik 2 abgespeicherte Grenzwert, so verschiebt sich zunächst, wie oben schon geschildert der Abbildungsfleck der Empfangslinse 4 von der Photodiode 5 auf das Photodiodenarray 9. Gleichzeitig schaltet die Steuer -und Auswertelektronik 2 in einen zweiten Betriebsmodus um, in welchem nunmehr das Ausgangssignal des Photodiodenarrays 9 nach den für das Triangulationsverfahren üblichen Algorithmen ausgewertet wird.

Figur 3 ist zu entnehmen, dass es einen Übergangsbereich gibt, in welchem der Abbildungsfleck der Empfangslinse 4 von der Photodiode 5 des TOF-Teils der Vorrichtung auf das Photodiodenarray 9 des Triangulations-Teiles der Vorrichtung überwechselt. Dabei wird es Entfernungen geben, in denen der Abbildungsfleck teilweise auf der Photodiode 5 und teilweise auf dem Photodiodenarray 9 liegt. Hier muss durch geeignete Auswertverfahren sichergestellt werden, dass keine Unstetigkeit entsteht, beispielsweise dadurch, dass festgestellt wird, auf welchem der beiden Empfangssensoren 5, 9 der Schwerpunkt des Abbildungsfleckes liegt. Dieser wird dann zur Auswertung herangezogen. Alternativ kann in der Steuer-und Auswertelektronik 2 ein Alpha -oder Kalman-Filter 18 vorgesehen sein, dessen Aufbau und Funktion aus der einschlägigen Literatur bekannt sind.

Figur 3 zeigt in der Empfangslinse 4 eine kleine Facette 10. Dabei kann es sich insbesondere um eine Linsenfläche handeln, deren Achse gegenüber der Achse der restlichen Empfangslinse 4 derart angeordnet ist, dass Anteile aus dem reflektierten Licht eines Messobjektes 19 aus dem Nahbereich auf den Empfangssensor 5 fällt. So lässt sich bei bestimmten Entfernungen des Messobjektes 19 von der Vorrichtung ein zusätzlicher Lichtanteil auf die Photodiode 5 des TOF-Teils der Vorrichtung lenken. Dieser zusätzliche Lichtanteil ist in Figur 1 mit dem Bezugszeichen 11 gekennzeichnet. Auf diese Weise lässt sich dafür sorgen, dass in dem Bereich II, in welchem die Vorrichtung nach dem TOF-Verfahren arbeitet, bereits zu Beginn, also bei der Grenzentfernung zwischen den beiden Bereichen, ausreichend Lichtenergie zur Verfügung steht.

Das Umschalten vom einen Betriebsmodus auf den anderen muss nicht, wie oben geschildert, abrupt an einem Grenzwert erfolgen. Es kann vielmehr auch ein kontinuierliches "Überblenden" in einem Bereich zwischen zwei Grenzwerten erfolgen, wobei in diesem Bereich beide Betriebsmodi aktiv sind und ihre Signale zu einem gemeinsamen Ausgangssignal kombiniert werden. Dabei findet zweckmäßigerweise eine Gewichtung der beiden Signale abhängig davon ab, wie nahe die gemessene Entfernung jeweils an den beiden Grenzwerten liegt.

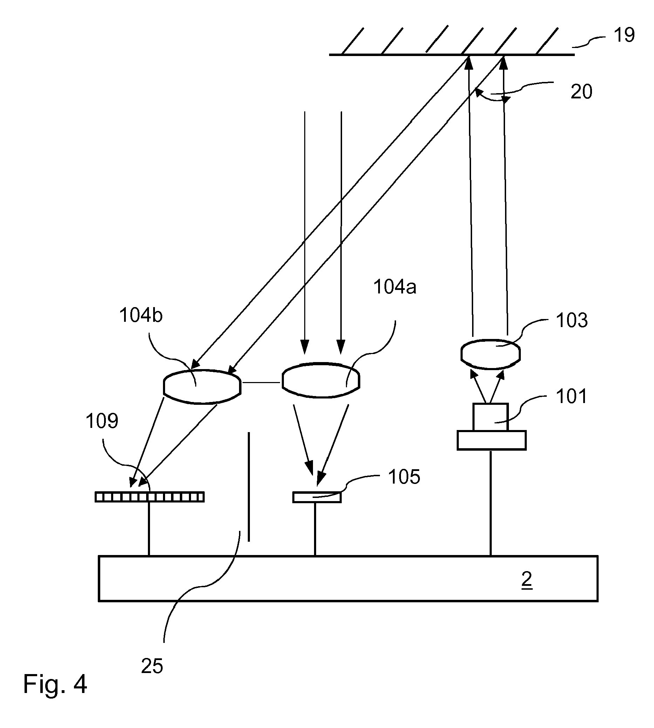

Figur 4 zeigt ein zweites Ausführungsbeispiel einer Vorrichtung zur Entfernungsmessung, die derjenigen der Figur 3 sehr ähnelt. Entsprechende Teile sind daher mit demselben Bezugszeichen zuzüglich 100 gekennzeichnet. Die Steuer- und Auswertelektronik ist hier nicht dargestellt, aber selbstverständlich in derselben Weise wie in Figur 1 vorhanden.

Der Sendezweig der Vorrichtung mit der Senderlichtquelle 101 und der Senderlinse 103 stimmt mit demjenigen der Figur 3 vollständig überein. Hauptunterschied der beiden Ausführungsbeispiele ist der, dass bei demjenigen der Figur 4 zwei getrennte Empfangslinsen 104a und 104b vorgesehen sind. Die beiden Empfangslinsen 104a und 104b sind mittels einer Blende 25 voneinander getrennt. Die Empfangslinse 104a ist dem TOF-Teil der Vorrichtung zugeordnet. Sie erzeugt bei verhältnismäßig großen Entfernungen des Messobjekts 19, von der Vorrichtung einen Abbildungsfleck auf der Photodiode 105. Die daneben angeordnete zweite Empfangslinse 104b gehört dem Triangulations-Teil der Vorrichtung an. Sie wird von Lichtstrahlen durchsetzt, die bei kleineren Entfernungen des Messobjekts 19 von der Vorrichtung unter einem größeren Winkel 20 gegenüber dem ausgesandten Sendelichtstrahl zurückkehren und in einem Abbildungsfleck auf dem Photodiodenarray 109 gesammelt werden. Die Ausgestaltung der Vorrichtung nach Figur 4 erlaubt in manchen Fällen eine bessere Abbildung der zurückgestreuten Lichtstrahlen, ist jedoch aufgrund des Vorhandenseins zweier Empfangslinsen 104a, 104b etwas aufwendiger. Die Funktionsweise beider Ausführungsbeispiele ist jedoch dieselbe. Der Strahlengang für Messobjekte im Fernbereich ist in den Figuren 3 und 4 nicht dargestellt. Das Messobjekt 16 der Figuren 3 und 4 ist jeweils im Nahbereich dargestellt.

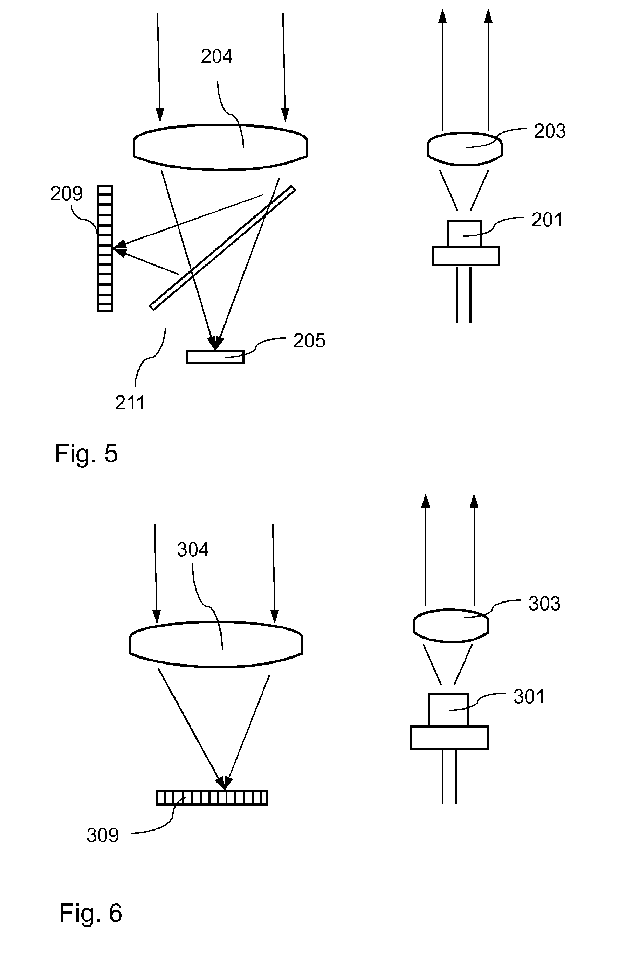

Auch das in Figur 5 dargestellte Ausführungsbeispiel einer Vorrichtung zur Entfernungsmessung ähnelt dem vorausgegangenen stark. Entsprechende Teile sind daher mit Bezugszeichen versehen, die gegenüber dem Ausführungsbeispiel der Figur 4 erneut um 100 erhöht wurden.

Der Sendezweig der Vorrichtung mit der Senderlichtquelle 201 und der Senderlinse 203 entspricht wieder identisch dem Sendezweig der Figuren 3 und 4. Unterschiedlich ist wiederum die Anordnung der Photodiode 205, die zur Durchführung des TOF-Verfahrens eingesetzt wird, und des Photodiodenarrays 209, welches der Durchführung des Triangulationsverfahrens dient. Die Empfangslinse 204 wird in beiden Messverfahren benutzt. Im Strahlengang hinter der Empfangslinse 204 befindet sich ein halbdurchlässiger Spiegel 211. Das den Spiegel 211 durchdringende Licht fällt auf die Photodiode 205, während das an dem halbdurchlässigen Spiegel 211 reflektierte Licht auf das Photodiodenarray 209 gelangt.

Dieses Ausführungsbeispiel hat weniger Probleme mit einer Übergangszone zwischen den Betriebsarten des TOF-Verfahrens und des Triangulationsverfahrens als die Ausführungsbeispiele der Figuren 3 und 4. Außerdem ist man in der Anordnung der Empfangssensoren 205, 209, die den beiden Messverfahren zugeordnet sind, freier. Allerdings wird dies durch das zusätzliche Bauteil des halbdurchlässigen Spiegels 211 erkauft. In den Ausführungsbeispielen der Figuren 5 und 6 ist das Messobjekt 19 nicht dargestellt.

In Figur 6 ist ein weiteres Ausführungsbeispiel einer Vorrichtung zur Entfernungsmessung dargestellt, welches mit der geringstmöglichen Zahl von Komponenten auskommt. Gleichwohl ist die Ähnlichkeit mit den vorausgegangenen Ausführungsbeispielen groß. Gegenüber dem Ausführungsbeispiel der Figur 5 sind entsprechende Teile mit demselben Bezugszeichen, erneut um 100 erhöht, gekennzeichnet.

Der Sendezweig der Vorrichtung mit der Senderlichtquelle 301 und der Senderlinse 303 entspricht demjenigen der oben beschriebenen Ausführungsbeispiele. Es wird nur eine einzige Empfangslinse 304 verwendet; insofern ist die Ähnlichkeit des Ausführungsbeispiels der Figur 6 mit den Ausführungsbeispielen der Figuren 3 und 5 größer als mit dem Ausführungsbeispiel der Figur 4. Während aber bei den oben beschriebenen Ausführungsformen jeweils zwei unterschiedliche Empfangssensoren für die Messung im TOF-Verfahren einerseits und im Triangulationsverfahren andererseits vorgesehen waren, verwendet die Ausführungsform der Figur 6 nur einen einzigen Empfangssensor 309 in Form eines Photodiodenarrays.

In dem Betriebsmodus des Triangulationsverfahrens arbeitet das Photodiodenarray 309 in derselben Weise wie bei den Ausführungsformen der Figuren 3 bis 5. Für den TOF-Betriebsmodus der Vorrichtung wird eine einzelne Photodiode oder eine Gruppe von Photodioden innerhalb des Photodiodenarrays 309 verwendet. Die Position dieser Photodiode oder dieser Gruppe von Photodioden innerhalb des Photodiodenarrays 309 wird so gewählt, dass sich unter den gegebenen geometrischen Verhältnissen eine möglichst günstige Abhängigkeit der empfangenen Energie von der Entfernung des Messobjektes ergibt. Schwierigkeiten mit einer Übergangszone zwischen den beiden Messverfahren gibt es, ähnlich wie beim Ausführungsbeispiel der Figur 5, nicht.

Die Ausführungsbeispiele der Figuren 3 bis 6 arbeiteten mit einem Lichtstrahl verhältnismäßig kleinen Durchmessers, so dass der sich auf den verschiedenen Empfangssensoren unter der Wirkung der Empfangslinse bildende Abbildungsfleck im Wesentlichen kreisförmig war.

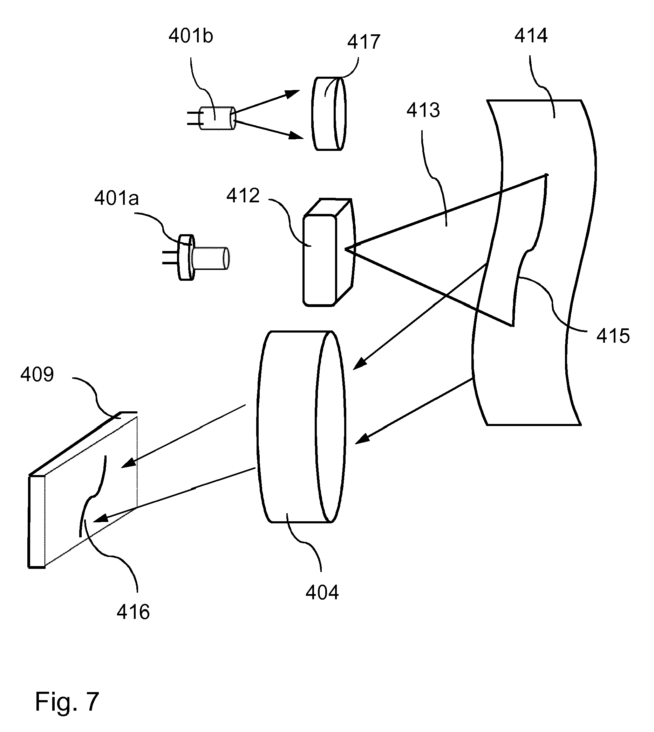

Bei dem Ausführungsbeispiel der Figur 7 dagegen wird eine Art Strahlfächer erzeugt. Hinter der Senderlichtquelle 401a ist zu diesem Zwecke eine Strahlformungsoptik 412 angeordnet, welche den von der Senderlichtquelle 401 a abgegebenen konventionellen Lichtstrahl zu einem mit dem Bezugszeichen 413 gekennzeichneten Fächerstrahl umwandelt. Dieser Fächerstrahl 413 beleuchtet auf dem Messobjekt 414, das in diesem Falle dargestellt ist, eine Linie 415. Ein Teil des von dieser beleuchteten Linie 415 ausgehenden Streulichts wird durch die Empfangslinse 404 auf einem zweidimensionalen Photodiodenarray 409 abgebildet und erzeugt dort die Abbildungslinie 416. Diese tritt an die Stelle des Abbildungsflecks bei den weiter oben beschriebenen Ausführungsbeispielen.

Das Photodiodenarray 409 wird hier, ähnlich wie beim Ausführungsbeispiel der Figur 6, sowohl im TOF- als auch im Triangulations-Betriebsmodus der Vorrichtung als Empfangssensor eingesetzt.

Die Vorrichtung der Figur 7 erlaubt insbesondere die Ermittlung eines Oberflächenprofils, wie dies allgemein bei linienhafter Beleuchtung des Messobjektes bekannt ist. Dabei wird die Ortsauflösung der des Photodiodenarrays 409 zur Erzeugung einer Intensitätsverteilung im Erfassungsbereich genutzt und erzeugt damit die Abbildungslinie 416.

Grundsätzlich ist es selbstverständlich auch möglich, das Messobjekt 414 flächig zu beleuchten. Diese Option ist in Figur 7 durch die Senderlichtquelle 401 b dargestellt, welche durch eine entsprechende Strahlformungsoptik 417 das Messobjekt 414 flächig beleuchtet. Dabei wird die Ortsauflösung der des Photodiodenarrays 409 zur Erzeugung einer Abstandsverteilung im Erfassungsbereich genutzt.

Alle oben beschriebenen Vorrichtungen zur Entfernungsmessungen machen im Fernbereich, also bei größeren Entfernungen zwischen dem Messobjekt und der Vorrichtung, vom TOF-Verfahren Gebrauch. Stattdessen kann im Fernbereich aber auch das bekannte Phasenmessverfahren eingesetzt werden, für welches im Wesentlichen die gleichen optischen Elemente sowie Senderlichtquellen und Empfangssensoren eingesetzt werden kann. Unterschiedlich ist im Wesentlichen die Art der Ansteuerung der Senderlichtquelle sowie der Auswertung der Signale, die von dem entsprechenden Empfangssensor abgegeben wird.

Während beim TOF-Verfahren die Entfernung aus der Laufzeit der verschiedenen Impulse gewonnen wird, geschieht dies im Phasenmessverfahren durch Feststellung der Phasendifferenz zwischen dem ausgesandten und dem zurückgestreuten Lichtstrahl. Die entsprechenden Vorgänge und Verfahren zur Auswertung sind dem Fachmann bekannt.

## Patentansprüche

1. Vorrichtung zur Entfernungsmessung mit
a) mindestens einer Senderlichtquelle (1; 101; 201; 301; 401);
b) mindestens einem Empfangssensor (5; 105; 205; 305; 405);
c) einer Steuer- und Auswertelektronik (2), welche die Senderlichtquelle (1; 101; 201; 301; 401) ansteuert und der Ausgangssignale des Empfangssensors (5; 105;205; 305; 405) zugeführt werden und die in der Lage ist, in einem Betriebsmodus aus der Laufzeit von Lichtimpulsen, die von der Senderlichtquelle (1; 101;201; 301; 401) ausgesandt, an einem Messobjekt (19) zurückgestreut und von dem Empfangssensor (5; 105; 205; 305; 405) detektiert werden, oder aus dem Vergleich der Phasenlagen des von der Senderlichtquelle (1; 101; 201; 301; 401) ausgesandten und des von dem Empfangssensor (5; 105; 205; 305; 405) detektierten Lichts die Entfernung des Messobjekts (19) zu errechnen;
**dadurch gekennzeichnet, dass**
d) mindestens ein Empfangssensor (9; 109; 209; 309; 409) eine derartige räumliche Ausdehnung und ein solches räumliches Auflösungsvermögen besitzt, dass der von dem zurückgestreuten Licht bestrahlte Bereich ein Maß für den Winkel (20) zwischen dem von der Senderlichtquelle (1; 101; 201; 301; 401) ausgestrahlten und dem am Messobjekt (19) zurückgestreuten Licht ist;
e) die Steuer- und Auswertelektronik (2) so ausgebildet ist, dass sie in einem zweiten Betriebsmodus in der Lage ist, aus dem von dem räumlich auflösenden Empfangssensor (9; 109; 209; 309; 409) zugeführten Signal die Entfernung des Messobjektes (19) zu errechnen;
wobei
f) in der Steuer- und Auswertelektronik (2) ein erster Grenzwert für die Entfernung des Messobjektes (19) speicherbar ist, bei dessen Überschreiten ausschließlich der erste Betriebsmodus aktiviert wird, und ein zweiter Grenzwert für die Entfernung des Messobjekts (19) speicherbar ist, bei dessen Unterschreiten ausschließlich der zweite Betriebsmodus der Steuer- und Auswertelektronik (2) aktiviert wird.

2. Vorrichtung nach Anspruch 1, **dadurch gekennzeichnet, dass** die Senderlichtquelle (1; 101; 201; 301; 401) und/oder eine der Senderlichtquelle (1; 101; 201; 301; 401) nachgeschaltete Senderlinse (3; 103; 203; 303; 403) in beiden Betriebsmodi der Steuer- und Auswertelektronik (2) dieselbe ist.

3. Vorrichtung nach Anspruch 1 oder 2, **dadurch gekennzeichnet, dass** der Empfangssensor (309; 409) in beiden Betriebsmodi der Steuer- und Auswertelektronik (2) derselbe ist, wobei in dem ersten Betriebsmodus nur ein räumlicher Teilbereich des Empfangssensors (309; 409) zur Erzeugung eines Ausgangssignales genutzt wird.

4. Vorrichtung nach Anspruch 1 oder 2, **dadurch gekennzeichnet, dass** für die beiden Betriebsmodi der Steuer- und Auswertelektronik (2) getrennte Empfangssensoren (5,9; 105, 109; 205, 209) vorgesehen sind.

5. Vorrichtung nach Anspruch 4, **dadurch gekennzeichnet, dass** eine Empfangslinse (4; 204) vorgesehen ist, welche das vom Messobjekt (19) zurückgestreute Licht auf beide Empfangssensoren (5, 9; 205, 209) bündelt.

6. Vorrichtung nach Anspruch 5, **dadurch gekennzeichnet, dass** der Empfangslinse (204) in Lichtstrahlrichtung ein halbdurchlässiger Spiegel (211) nachgeschaltet ist, wobei das von dem Spiegel (211) durchgelassene Licht auf einen (205) und das am Spiegel (211) reflektierte Licht auf den anderen (209) der beiden Empfangssensoren (205, 209) fällt.

7. Vorrichtung nach Anspruch 4, **dadurch gekennzeichnet, dass** jedem Empfangssensor (105, 109) eine eigene Empfangslinse (104a, 104b) zugeordnet ist.

8. Vorrichtung nach einem der vorhergehenden Ansprüche, **dadurch gekennzeichnet, dass** mindestens einer Senderlichtquelle (401) eine Strahlformoptik (412, 417) nachgeschaltet ist, welche das von der Senderlichtquelle (401) ausgesandte Licht derart auffächert, dass das Messobjekt (414) linienhaft oder flächig beleuchtet wird.

9. Vorrichtung nach einem der vorhergehenden Ansprüche, **dadurch gekennzeichnet, dass** der erste Grenzwert mit dem zweiten Grenzwert identisch ist, sodass das Umschalten vom einen zum anderen Betriebsmodus unmittelbar bei diesem Grenzwert erfolgt.

10. Vorrichtung nach einem der Ansprüche 1 bis 9, **dadurch gekennzeichnet, dass** der erste Grenzwert größer als der zweite Grenzwert ist und in dem Entfernungsbereich, der zwischen den beiden Grenzwerten liegt, beide Betriebsmodi aktiviert werden und die Steuer- und Auswertelektronik (2) so programmiert ist, dass die in beiden Betriebsmodi erhaltenen Signale zur Berechnung der gemessenen Entfernung kombiniert werden.

11. Vorrichtung nach Anspruch 10, **dadurch gekennzeichnet, dass** bei der Kombination der beiden in den beiden Betriebsmodi gewonnenen Signale das Signal des ersten Betriebsmodus in der Nähe des ersten Grenzwertes stärker als in der Nähe des zweiten Grenzwertes gewichtet wird und das Signal des zweiten Betriebsmodus in der Nähe des zweiten Grenzwertes stärker gewichtet wird als in der Nähe des ersten Grenzwertes.

12. Vorrichtung nach einem der vorhergehenden Ansprüche, **dadurch gekennzeichnet, dass** die Steuer- und Auswertelektronik (2) ein Alpha- oder Kalman-Filter (18) enthält, welches eine Diskontinuität des für die gemessene Entfernung stehenden Signals an einem Grenzwert der Entfernung verhindert.
